# EUROPEAN PATENT SPECIFICATION

(11) **EP 4 580 778 B1**
(45) Date of publication and mention of the grant of the patent: **06.05.2026**
(21) Application number: 23798830.8
(22) Date of filing: 30.08.2023
(51) Int. Cl.: B01D 29/23, B01D 29/58, B01D 29/90, B01D 35/027, B01D 35/147, B01D 35/157, B01D 36/02

(54) **FILTER FOR HYDRAULIC FLUIDS FOR HYDRAULIC CIRCUITS**
FILTER FÜR HYDRAULIKFLÜSSIGKEITEN FÜR HYDRAULIKKREISLÄUFE
FILTRE POUR DES FLUIDES HYDRAULIQUES POUR DES CIRCUITS HYDRAULIQUES

(30) Priority: 30.08.2022 IT 202200017781
(43) Date of publication of application: 09.07.2025
(73) Proprietor: Mp Filtri S.p.A., 20042 Pessano con Bornago (MI) (IT)
(72) Inventor: RIPAMONTI, Alberto, 20042 Pessano con Bornago (MI) (IT); MAZZUCCHI, Claudio, 20042 Pessano con Bornago (MI) (IT); PASOTTO, Tommaso Bruno, 20042 Pessano con Bornago (MI) (IT); PASOTTO, Giovanni, 20042 Pessano con Bornago (MI) (IT)
(74) Representative: Simino, Massimo
(86) International application number: PCT/IB2023/058557
(87) International publication number: WO 2024/047543

(56) References cited:
- EP-A1- 3 369 942
- EP-A1- 3 466 518
- CN-U- 202 113 685
- DE-A1- 102020 000 738
- US-A1- 2012 312 759

## Description

### Field of the invention

The present invention refers to a filter for hydraulic fluids to be used in hydraulic circuits, such as for example a filter to be used in hydraulic transmission, lubrication systems or pressurised filtration systems of the semi-immersed or immersed type.

For example, the filter object of the present invention can be used in industrial plants, in construction machines, agricultural machines, in earthmoving machines, in vehicles for lifting and transport and other similar applications.

For ease of presentation, the present disclosure is made, by way of non-limiting example, with particular reference to a filter for hydraulic fluids used in the hydraulic circuit of earth lifting machines indicated below also only with the name of "oil" for ease of presentation.

### Background of the invention

As is known, hydraulic filters are widely used in lubrication, hydraulic transmission and/or collection circuits to substantially define the means for intercepting and blocking the residues present in the working fluids. De facto, the main cause of the anomalies that can occur in the hydraulic systems is often due to the presence of contaminating elements in the fluid: oil contamination can occur due to water infiltration, or due to the presence of solid particles.

It is clear that a good functioning of the hydraulic filters is a fundamental factor to ensure a correct oil filtration, so as to guarantee the proper functioning of the earthmoving machine.

The correct functioning of the hydraulic filters is fundamental as it allows to make the most of the industrial plants and/or the operating machines in terms of performance, energy consumption and pollution.

In fact, it is clear that an adequate action of filtration and elimination of contaminants, which can be carried out by a filter, ensures that the chemical-physical characteristics of the oil are kept constant over time, preventing impurities and the like from damaging parts of the hydraulic circuits.

Of particular interest are then the hydraulic filters positioned along the line of return to the tank of the hydraulic circuit, which also perform the task of safety filters to protect the working devices from any contaminants present in the fluid, so as to keep the tank fluid clean.

On this point, it should be noted that, generally, hydraulic circuits are provided with collection/accumulation tanks connected to motors and/or pumps: the tank essentially defines the oil storage unit that guarantees to the pump and/or to the motor the use of the desired amount of fluid.

The oil level in these tanks is not at all constant, as it depends on the demand of the hydraulic system of the machine. Thus, for example, in the case of an earthmoving machine provided with a working arm, it is evident that, depending on the position of the working arm, in the extending or rather retracted position, the hydraulic circuit must provide the actuators in charge of moving the working arm with a greater or lesser amount of hydraulic working fluid, fluid coming from the aforesaid collection/accumulation tank.

This explains why the oil level in these tanks is highly variable. Furthermore, it must be considered that at each actuation of a hydraulic pump intended to provide hydraulic working fluid to the users, a transient is established in the fluid circuit during which the hydraulic working fluid is moved to actuate an actuator, with consequent variation in the level of the hydraulic fluid inside the tank.

The filters for hydraulic fluids for hydraulic circuits generally work in a condition such that they are semi-immersed in the hydraulic liquid itself and comprise a filter body, generally having an elongated cylindrical shape, defining the external support casing of the filtering element.

Generally, the filter body has a fixing portion, which allows a stable engagement of the filter body to the tank and the partial immersion of the latter in the working fluid. Again at the top of the filter, the filter body has an inlet provided with a supply chamber through which the working fluid is introduced into the filtering element. At the opposing end in proximity to the bottom of the filter body, there is an outlet for the emission of filtered fluid. The filter body defines in its inside a housing compartment adapted to house the filtering element, the so-called filtering cartridge, which is therefore interposed between the entry and the exit of the working fluid in/from the filter to be crossed by the hydraulic fluid and perform the filtering action thereon.

It should be considered that in the hydraulic circuits a certain amount of air bubbles is often present, since:
- a part of gas (air) is naturally present dissolved in the fluid at an equilibrium point, and can locally, following pressure gradients in the transients, give rise to the formation of bubbles;
- in the hydraulic circuit there may be air suction from the outside due to any small leaks in the circuit;
- air can be trapped in the hydraulic fluid as a result of fluctuations in the level of the fluid in the tank that cause a lapping on the free surface of the hydraulic fluid;
- excessive speed of the fluid exiting the filter may generate turbulence in the hydraulic fluid such as to cause air bubbles to be incorporated,
- if the oil outlet is positioned above the free surface of the hydraulic fluid in the tank, foaming/bubbling may occur.

With reference to the presence of air bubbles inside the hydraulic fluid, albeit small in size, it should be pointed out that this presence is completely undesired, as it is harmful to the hydraulic systems and circuits as it:
- may give rise to cavitation phenomena in the hydraulic fluid;
- leads to an increase in the noise level of the hydraulic system;
- poses problems of greater compressibility of the hydraulic fluid;
- reduces the thermal conductivity of the hydraulic fluid and
- may result in a deterioration of the characteristics of the hydraulic fluid over time.

On this point, it should be pointed out that the currently known filters are not always able to avoid or reduce these problems, so that the need to have a filter capable of eliminating or reducing the presence of air inside the hydraulic fluid, in particular after the initial step of the working transients of an earthmoving machine, is very much felt today.

Moreover, it has been experimentally possible to verify that the introduction of hydraulic fluid from the filter to the collection/accumulation tank, particularly when the oil level in the collection/accumulation tank is not high, causes bubbling phenomena in the hydraulic fluid and, above all, incorporation into the fluid of air from the collection/accumulation tank.

Furthermore, these undesired phenomena were found to be all the more accentuated:
- the lower the level of the working fluid inside the filter is and, consequently, the filter itself is filled with air and
- the greater the speed with which the hydraulic fluid outflows from the filter to be reintroduced into the collection/accumulation tank.

According to a further aspect, the structure of the filter, in addition to being structurally simple and not very bulky, must allow easy maintenance of its spare parts, avoiding the presence of elements that are particularly complicated to be replaced or that may give rise to problems such as, for example, the difficulty of having to screw parts positioned in proximity to the bottom which, moreover, can cause problems of loosening of parts during normal use in the presence of vibrations and impacts.

CN 202 113 685 discloses to an oil filter, in particular for engineering machinery, which adopts direct return oil filtration.

In view of the above, it is therefore evident that today the need to have available a filter for hydraulic fluids to be used for hydraulic circuits which allows to perform an effective filtration and elimination of contaminating elements, also reducing the occurrence and the presence of air bubbles inside the liquid contained in the accumulation/collection tank is very much felt. At the same time, the need to be met is also to have a filter that can be easily implemented and positioned inside a tank, and that is easy and simple to maintain, even for usual filtering cartridge replacement activities.

### Summary of the invention

The problem underlying the present invention is that of devising a filter for hydraulic fluids to be used in hydraulic circuits, such as for example a filter to be used in hydraulic transmission or lubrication systems or in pressurised filtration systems of the semi-immersed or immersed type, said filter having structural and functional characteristics such as to meet the aforesaid needs, while obviating the drawbacks mentioned with reference to filters for hydraulic fluids of the prior art.

This problem is solved by a filter for hydraulic fluids to be used in hydraulic circuits, such as for example a filter to be used in lubrication systems or in filtration systems of the semi-immersed or immersed type in accordance with claim 1.

The remaining claims detail further preferred features that enable further benefits to be achieved.

### Brief description of the figures

Further features and advantages of the present invention will emerge from the description given below of some preferred embodiments thereof, given by way of non-limiting example, with reference to the accompanying figures, in which:
- figure 1 represents a side plan view of a filter for hydraulic fluids according to the invention housed in an oil collection tank;
- figure 2 represents the view of figure 1 in section;

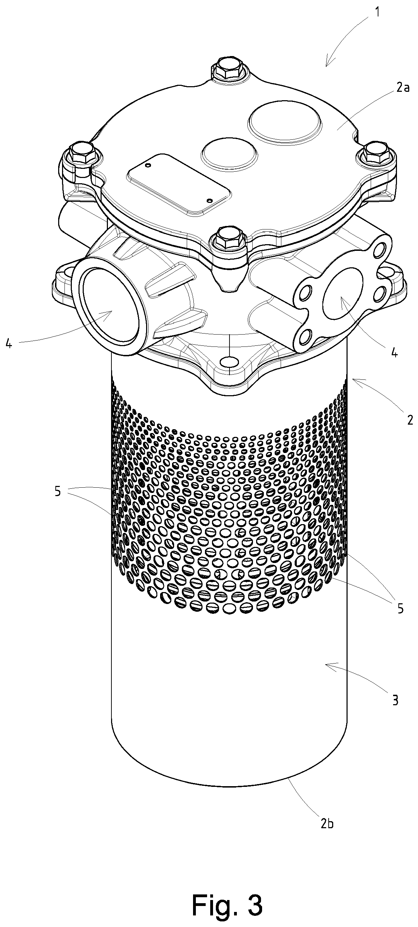

- figure 3 represents a perspective view of the only hydraulic fluid filter of figure 1;
- figure 4 represents a perspective partially broken view of the only filter for hydraulic fluids of figure 1;

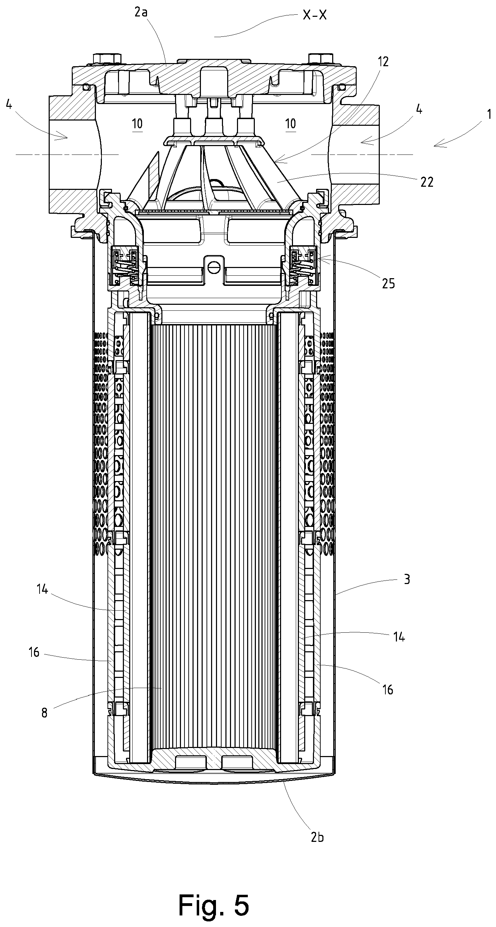

- figure 5 represents a plane view in longitudinal section of the only hydraulic fluid filter of figure 1;

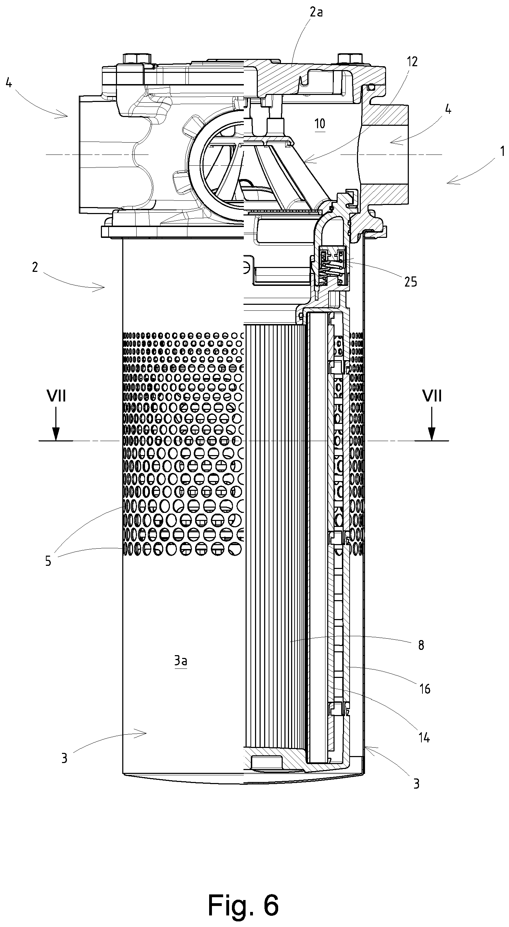

- figure 6 represents a plane view in longitudinal semi-section of the only hydraulic fluid filter of figure 1;
- figure 7 represents a view according to section line VII-VII of figure 6;

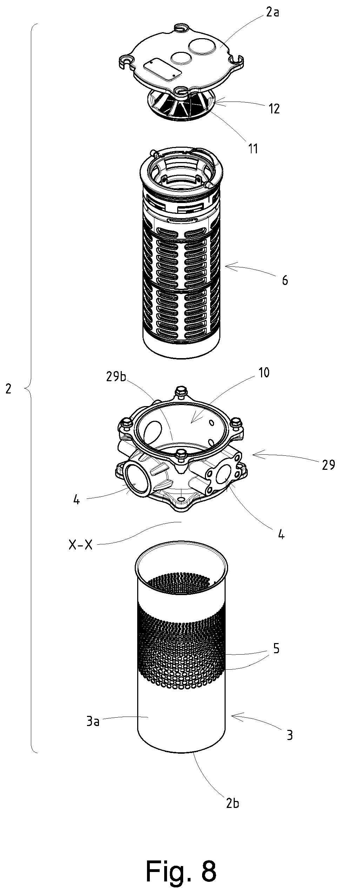

- figure 8 represents a partially exploded view of the only filter for hydraulic fluids of figure 1, showing an upper part of the filter body, a chamber body that identifies a collection chamber, a support structure of an anti-emptying structural element of the collection chamber, an annular body that identifies a by-pass passage, a filtering cartridge and a tubular body of the filter body provided with outlet openings;

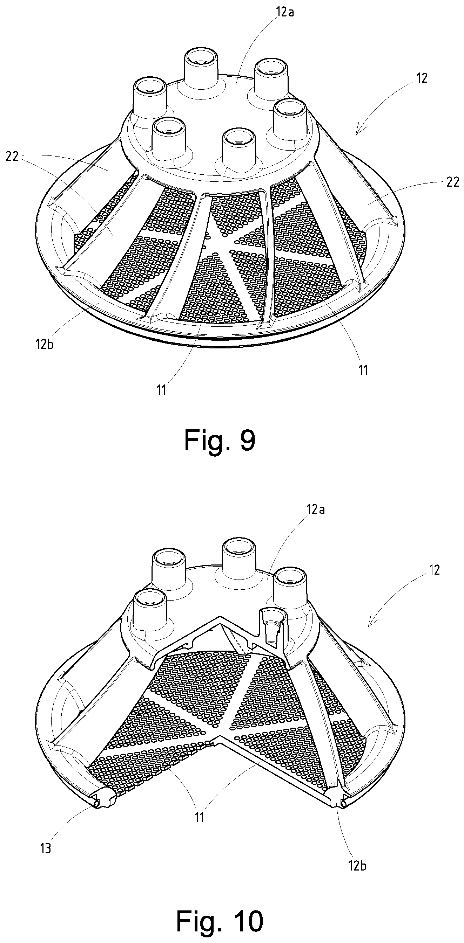

- figure 9 represents a perspective view of the support structure of the anti-emptying structural element of the collection chamber;
- figure 10 represents a perspective partially broken view of figure 9;

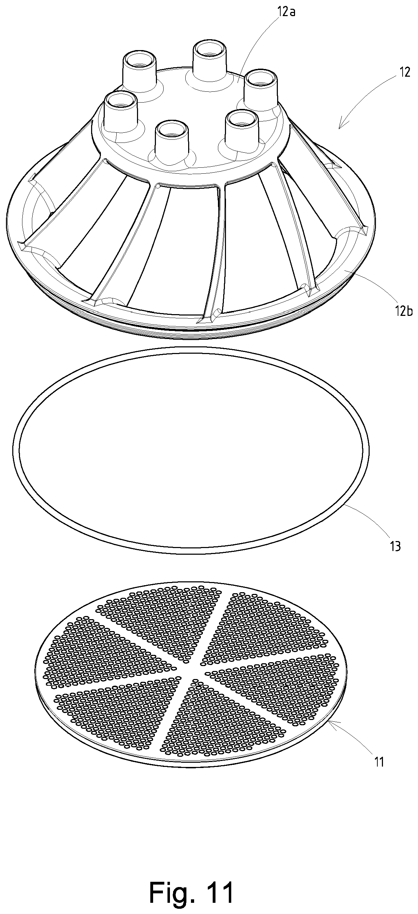

- figure 11 represents an exploded perspective view of figure 9;

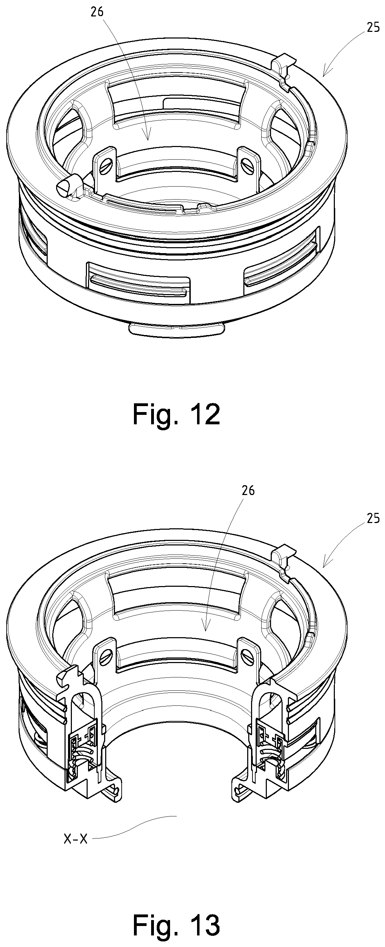

- figure 12 represents a perspective view of the annular body that identifies a by-pass passage;
- figure 13 represents a perspective partially broken view of figure 12;

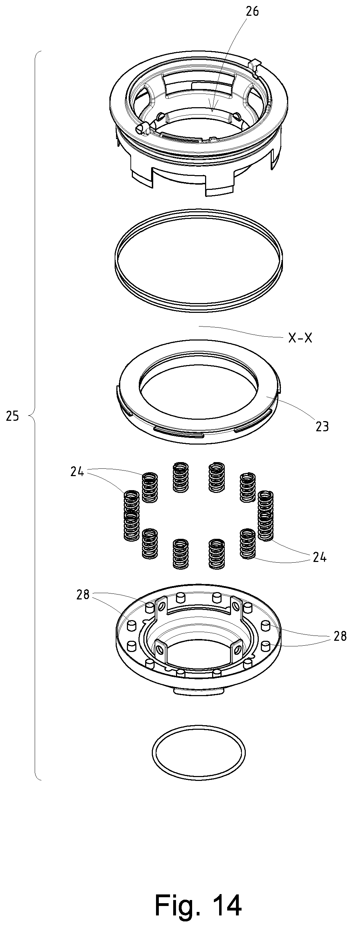

- figure 14 represents an exploded perspective view of figure 12;
- figures 15 and 16 represent plan views in semi-section of the annular body that identifies a by-pass passage with closed and, respectively, open by-pass passage;
- figure 16a represents a perspective view of the annular body that identifies a by-pass passage and of the filtering cartridge before being engaged with each other;

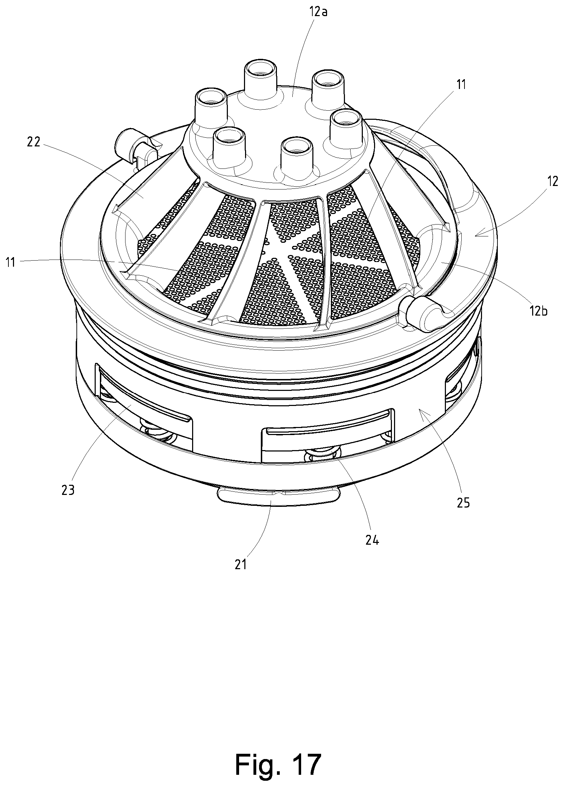

- figure 17 represents a perspective view of the support structure of the anti-emptying structural element of the collection chamber associated with the annular body that identifies a by-pass passage;
- figure 18 represents a side plan view of figure 17;
- figure 19 represents a plan view in longitudinal section of figure 17;
- figure 20 represents a perspective view of the only filtering cartridge of the filter of figure 1;
- figure 21 represents a perspective partially broken view of the filtering cartridge of figure 20;
- figure 22 represents a partially exploded perspective view of the filtering cartridge of figure 20 and
- figures 23 and 24 represent two exploded views of two distinct components of the filtering cartridge of figure 20.

### Detailed description of the invention

With reference to the attached figures, 1 globally indicates a filter for hydraulic fluids according to the invention to be used in hydraulic circuits, such as for example a filter to be used in hydraulic transmission or lubrication systems or pressurised filtration systems of the semi-immersed, or immersed type.

For ease of presentation, reference will be made below to a filter 1 for hydraulic fluids, specifically oil, intended to be housed integrally within a tank S for the storage/collection of oil of an earthmoving machine.

In accordance with a preferred embodiment, the filter 1 has an elongated cylindrical shape extending in a prevailing longitudinal direction X-X and is housed in the aforesaid tank S so as to be inserted from above into the tank, according to a so-called "tank-top" arrangement, in a condition of semi-immersion in the oil contained in the tank S over a prevailing longitudinal section starting from a lower end thereof.

With particular reference to the illustrated embodiment, the filter 1 according to the invention comprises a closed filter body 2 and at least one filtering cartridge 6.

In particular:
- the filter body 2 extends along a predefined axial direction X-X, from a first head end 2a to a second distal head end 2b;
- at the first head end 2a the filter body 2 comprises a chamber body 29 inside which a supply chamber 10 is identified;
- the chamber body 29 is provided with at least one hydraulic fluid inlet 4 in communication with the aforesaid supply chamber 10;
- the filter body 2 also comprises a tubular body 3, delimited by a side wall 3a, which extends longitudinally past said chamber body 29 up to said second distal head end 2b;
- the filter body 2 comprises at least one hydraulic fluid outlet 5 positioned at a substantially median portion of the aforesaid side wall 3a of the tubular body 3;
- a compartment 9 is identified in the tubular body 3, which is in fluid communication with the supply chamber 10 and is intended to removably house the aforesaid filtering cartridge 6;
- the filtering cartridge 6 comprises a tubular body extending longitudinally along the aforesaid predefined axial direction X-X from a first head end 6a, which is connected in fluid-tight communication with said supply chamber 10, to a second head end 6b which is closed by a bottom 7;
- said tubular body of said filtering cartridge 6 comprises a continuous tubular layer 8 of filtering material suitable for being crossed by a pressurised hydraulic fluid for performing a filtering action on the pressurised hydraulic fluid;
- the filtering cartridge 6 is housed and supported removably in the aforesaid compartment 9 of the filter body 2.

In a per se conventional manner, the continuous tubular layer 8 may comprise, for example, one or more layers of paper, microfibre, polyester, a sintered material, a non-woven fabric and/or other material suitable for this type of use, as well as it is possible to provide for a net.

Preferably:
- the non-woven fabric materials are based on glass fibres, cellulose fibres, synthetic or polymeric fibres, metal fibres or mixtures thereof;
- fabric materials comprise metallic and/or synthetic threads or filaments and
- the sintered materials comprise synthetic or metal particles or a mixture thereof.

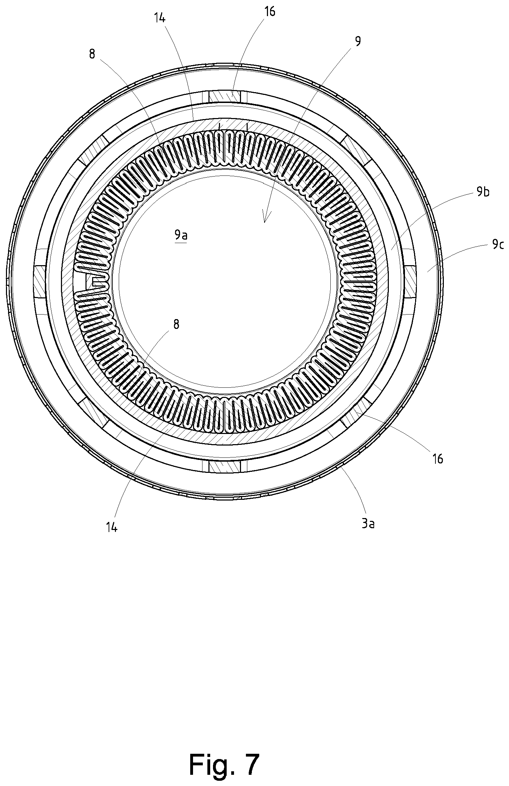

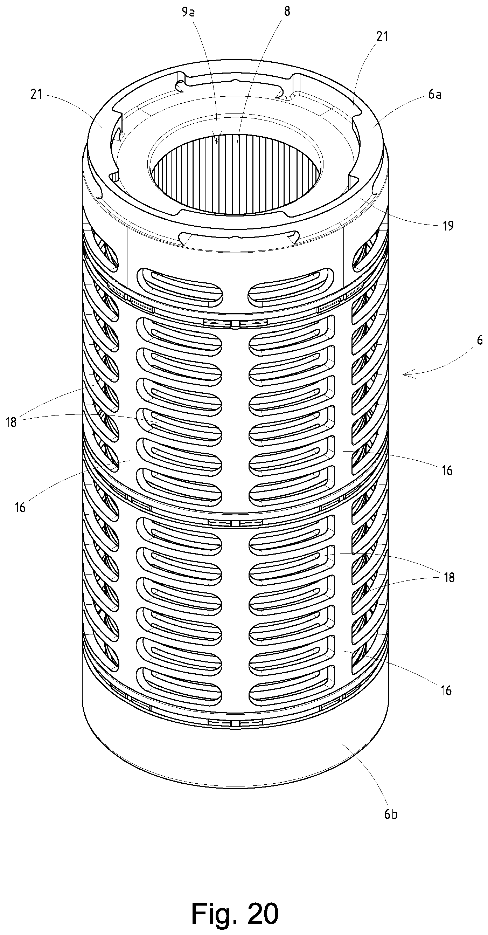

The continuous tubular layer of filtering material 8 subdivides said housing compartment 9:
- into a first chamber 9a (see figures 7, 20, 21) which is internal to the continuous tubular layer of filtering material 8 and is in fluid-tight communication with the supply chamber 10 and
- into a remaining external portion comprised between the tubular layer of filtering material 8 and the side wall 3a of the tubular body 3.

In accordance with the embodiment considered herein, it has been said that the filter 1 is of the "tank-top" type, i.e. inserted from above into the tank, so that the first head end 2a and the second distal head end 2b of the filter body 2 are the upper end thereof and, respectively, the lower end thereof.

The continuous tubular layer of filtering material 8 of the filtering cartridge 6 is configured and positioned inside the filter body 2 to be interposed in a hydraulic fluid path between the inlet opening, or openings, 4 and the outlet opening 5 so as to be crossed by the hydraulic fluid and to carry out the filtering action thereon, causing the filtration of the hydraulic fluid entering the filter body 2 through the inlet opening, or openings, 4 and exiting from said filter body 2 through the at least one outlet opening 5.

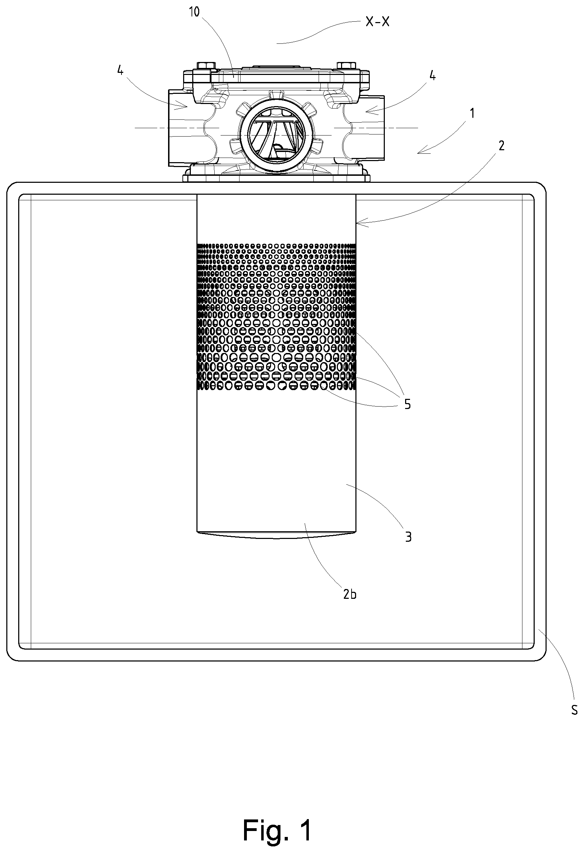

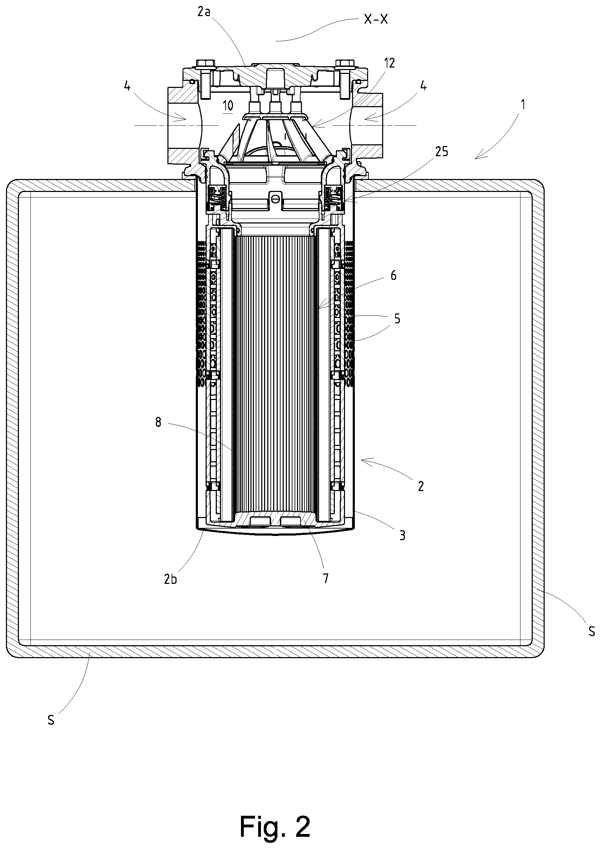

Preferably, the filter body 2 of the filter 1 comprises a fixing portion, which is preferably positioned at the aforesaid chamber body 29 (see figures 1 and 2), to enable a stable and firm fixing of the filter body 2 inside the tank S for the storage/collection of hydraulic fluid.

Preferably, the aforesaid first head end 6a of the filtering cartridge 6 comprises a quick-fit coupling means with a bayonet coupling 21 to ensure a secure and removable fixing of the filtering cartridge 6 inside the filter body 2 in a manner that is better described below in the present description.

Preferably, the aforesaid first chamber 9a internal to the filtering cartridge 6 is connected in hydraulic fluid communication with the supply chamber 10 of the filter body 2 by the interposition of hydraulic fluid interception means provided to create resistance to the passage of hydraulic fluid in order to contrast, slow down and/or prevent the emptying of hydraulic fluid from the supply chamber 10 towards the first chamber 9a internal to said filtering cartridge 6.

Preferably, the aforesaid hydraulic fluid interception means provided in the filter body 2 to slow down, or prevent, the emptying of hydraulic fluid from said supply chamber 10 towards said first chamber 9a internal to said filtering cartridge 6 comprises:
**I)** a structural element 11 positioned, preferably sealingly, between said supply chamber 10 and said first chamber 9a and comprising:
   - a layer provided with a plurality of small calibrated passages suitable for slowing down, or stopping, the passage of hydraulic fluid in particular until a predefined maximum pressure value, in particular when said hydraulic fluid is in a static or rest condition in said supply chamber 10;
   - a layer of material permeable to hydraulic fluid;
   - a layer of non-soluble granular material of small particle size;
   - a microporous continuous layer;
   - a filtering net with small meshes;
   - an open cell foam of predefined porosity;
   - a layer of non-soluble granular material; for example a sintered filter which can be made of synthetic or metal particles and/or a mixture thereof;
   - a layer with labyrinth passages;
   - a compact layer formed by interwoven threads; and/or
   - a layer of fabric, mesh or non-woven fabric material, for example based on glass fibres, cellulose fibres, synthetic or polymeric fibres, metal fibres or mixtures thereof,
      or
**II**) valve means reversibly movable from and towards a total or partially closed condition of the passage gap between said supply chamber 10 and said first chamber 9a internal to said filtering cartridge 6, wherein said valve means:
   - can be actuated by an actuator or
   - may provide a shutter/membrane pushed elastically to close against a shutter seat by elastic means (in accordance with two non-illustrated embodiments).

With reference to the aforesaid shutter/membrane pushed elastically to close against the seat of the shutter by elastic means, it should be noted that the opening of the shutter from the closed position takes place by means of the hydraulic fluid flowing in the filter from the inlet opening towards the at least one outlet, said opening intervening as soon as the pressure of said hydraulic fluid is such that it exceeds the elastic load exerted by the elastic means. Thus, the aforesaid shutter/membrane acts as an anti-emptying valve when the hydraulic fluid is at rest, while allowing the passage of the hydraulic fluid as the pressure increases with respect to the pressure value when the fluid is at rest.

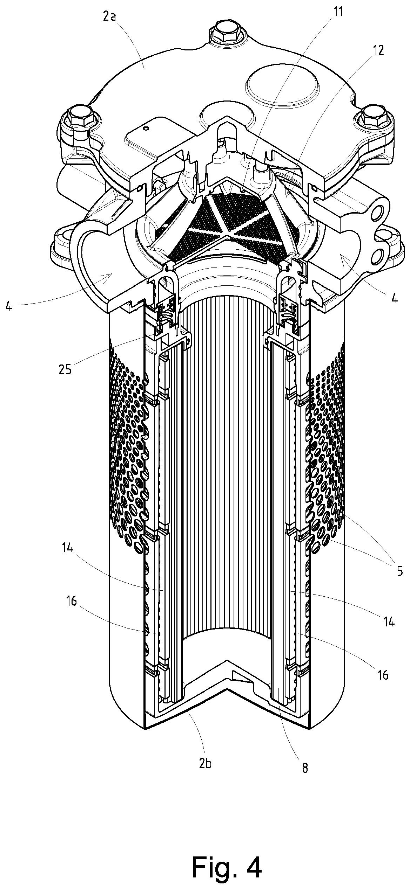

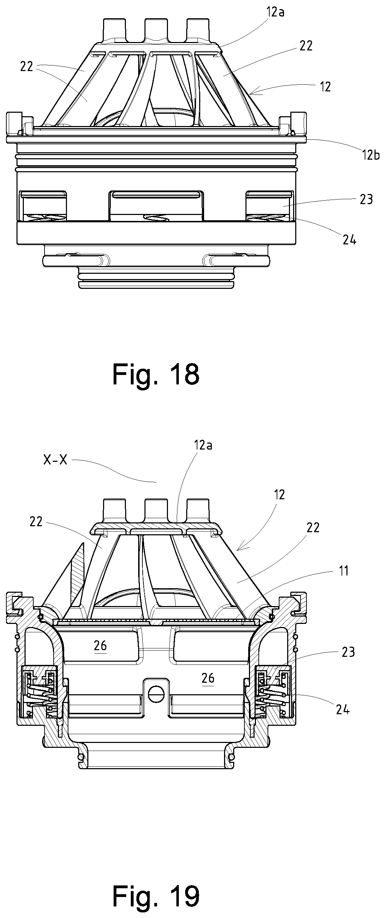

Similarly, the aforesaid structural element 11 positioned sealingly between the supply chamber 10 and the first chamber 9a (see figures 4 and 19) allows to act as an anti-emptying device to contrast, slow down and/or prevent the passage of hydraulic fluid when said hydraulic fluid is in a rest condition inside the supply chamber 10, while allowing to the hydraulic fluid to pass, from the collection chamber 10 to the chamber 9a internal to the filtering cartridge 6, as the pressure increases with respect to the pressure value of the hydraulic fluid when said hydraulic fluid is at rest in the collection chamber 10, i.e. when the hydraulic fluid is pressurised by a hydraulic motor/pump.

In accordance with a preferred embodiment, the aforesaid structural element 11 has:
- a plurality of calibrated holes or passages having a maximum dimension of the order of 100-1,500 µm and/or
- a porosity comprised between 40% and 60% (measured voids to solid).

Preferably, the aforesaid hydraulic fluid interception means are supported by a support structure 12 coupled and retained in position with internal components of said filter body 2 by the interposition of sealing means 13.

Preferably, the aforesaid support structure 12 extends longitudinally into the supply chamber 10 with a converging pattern, more preferably with a converging truncated cone pattern, towards a first head end 12a starting from a second head end 12b proximal to an end 29b of the chamber body 29 facing the filtering cartridge 6.

Preferably, the aforesaid support structure 12 extends from the first head end 12a to the second head end 12b by means of a plurality of vanes 22 inclined with respect to the longitudinal axis X-X with helical pattern, so that said support structure 12 identifies a static deviator suitable for diverting a flow of hydraulic fluid transiting in said supply chamber 10 imposing thereon a helical displacement component with respect to said longitudinal axis X-X, so as to ensure better mixing of the hydraulic fluid entering the collection chamber 10. This is particularly advantageous if there are multiple inlet openings 4.

The filtering cartridge 6 comprises a first tubular support element 14 circumscribed about said continuous tubular layer of filtering material 8 for exerting on said continuous tubular layer of filtering material 8 a containment/encircling action, in order to preserve the geometry of said continuous tubular layer of filtering material 8 also in the presence of pressurised hydraulic fluid.

The aforesaid first tubular support element 14 comprises a plurality of passages 15 in order to be crossed by a flow of hydraulic fluid transiting through the continuous tubular layer of filtering material 8.

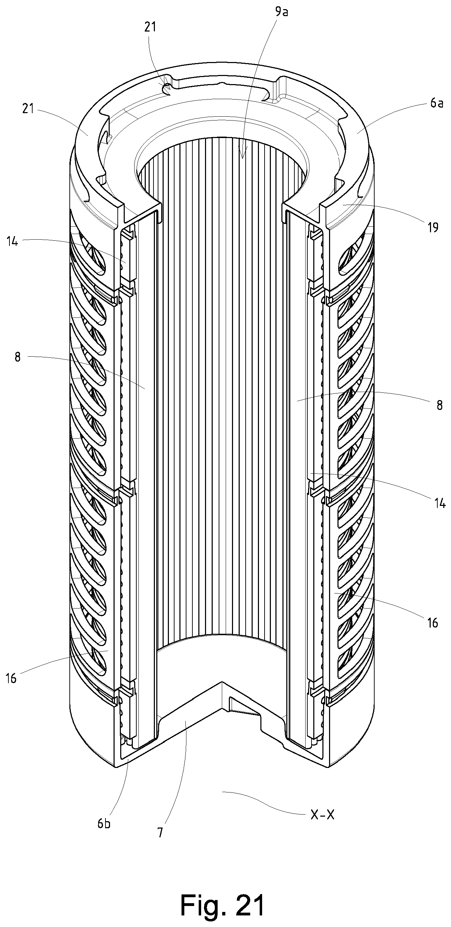

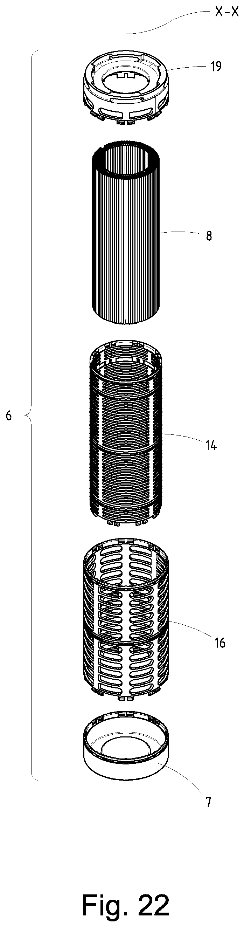

Advantageously, the filtering cartridge 6 also comprises a second tubular element 16 (see figures 21, 22) which is:
- circumscribed about the aforesaid first tubular support element 14;
- spaced at a predefined distance from said first tubular support element 14 and
- comprises a plurality of passages 18 in order to allow to be crossed by a flow of hydraulic fluid transiting through the continuous tubular layer of filtering material 8 and through the first tubular support element 14.

The presence of the aforesaid second tubular element 16 allows to subdivide the aforesaid remaining external portion of the compartment 9 comprised between the tubular layer of filtering material 8 and the side wall 3a of the tubular body 3 (see figures 7, 21 and 22):
- into a first intermediate chamber 9b comprised between the tubular layer of filtering material 8 and the second tubular element 16 and
- into an external chamber 9c comprised between the second tubular element 16 and the side wall 3a of the tubular body 3 of the filter body 2,
said second tubular element 16 acting in said filter 1 as a diffuser for slowing down the hydraulic fluid and reducing turbulence.

Preferably, the aforesaid passages 15 of the first tubular element 14 are shaped so as to identify oblong slots extending with a circumferential pattern along the wall of said first tubular element 14.

Preferably, the aforesaid passages 18 of the second tubular element 16 are shaped so as to identify oblong slots extending with a circumferential pattern along the wall of said first tubular element 16.

Preferably, the aforesaid passages 18 of the aforesaid second tubular element 16:
- identify overall a larger passage area, preferably at least 25% larger, than the passage area identified overall by the passages of the first tubular element 14 and/or
- have larger dimensions, preferably at least 25% larger, than the dimensions of the passages of the first tubular element 14.

Preferably, the filtering cartridge 6 comprises:
- an end annular support element 19 provided with means for coupling and fixing to a remaining part of the filter 1 and
- an opposing closing bottom 7.

The annular support element 19 and the opposing closing bottom 7 identify the aforesaid first head end 6a and the aforesaid second head end 6b, respectively, of the filtering cartridge 6 between which the first tubular element 14 and the second tubular element 16 extend longitudinally.

Preferably, the aforesaid means for coupling and fixing said annular support element 19 to a remaining part of the filter 1 is a quick-fit coupling means, more preferably it is a quick-fit coupling means with a bayonet coupling 21.

Preferably said first tubular element 14 and said second tubular element 16 have respective head ends firmly coupled, more preferably removably and/or by means of snap-fit coupling means, to said annular end support element 19 and to said closing bottom 7.

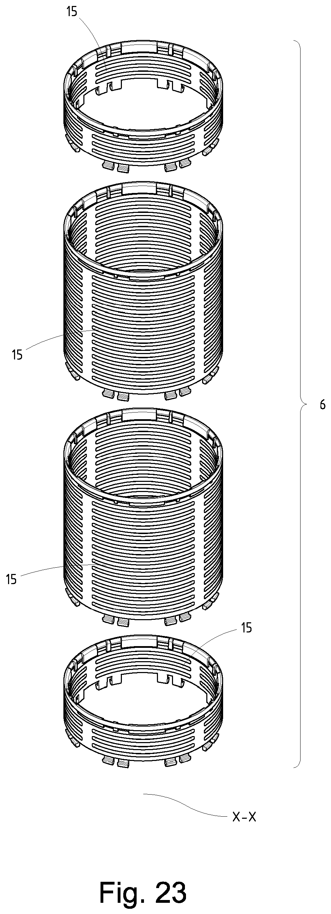

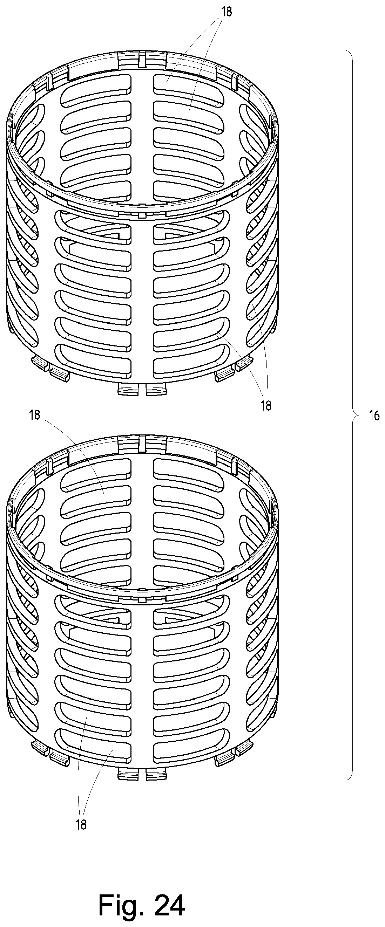

In accordance with the embodiment illustrated in figures 23 and 24, the first tubular element 14 and the second tubular element 16 are formed by a plurality of tubular segments (four and two respectively in the example of the figures) coupled and hooked to each other head-on, for example by means of hooking tabs and respective complementary hooking seats. This allows the filtering cartridge 6 to be made as a modular element whose length can easily be varied based on the specific design needs to be met, as it is possible to connect one, two or more tubular segments head-on to vary the length of the filtering cartridge. Obviously, the axial length of the tubular body 3 must also be set based on the axial length of the filtering cartridge.

Preferably, the aforesaid at least one hydraulic fluid outlet 5 comprises a plurality of through openings 5, preferably holes with a circular section, obtained in the side wall 3a of the tubular body 3 of the filter body 2.

In accordance with one embodiment, the aforesaid through openings 5 are distributed over a predefined longitudinal section of the side wall 3a and have larger dimensions in proximity to the second distal head end 2b of the filter body 2 and smaller dimensions in proximity to the first head end 2a of the filter body 2.

Preferably, said plurality of through openings 5 has a decreasing pattern proceeding longitudinally along said side wall 3a of the tubular body 3 of said filter body 2 from said second head end 2b of said filter body 2 towards said first head end 2a of said filter body 2, preferably the aforesaid decreasing distribution of said openings 5 is formed by a succession of longitudinal sections of side wall 3 in which:
- inside the same longitudinal section of side wall 3a of the tubular body 3 of said filter body 2, the through openings 5 have substantially equal dimensions and
- a longitudinal section of side wall 3a of the tubular body 3 of said filter body 2 more proximal to said first head end 2a of said filter body 2 has through openings substantially with the same smaller dimension than the dimension of the through openings 5 of a longitudinal section of side wall 3a of the tubular body 3 of said filter body 2 more proximal to said second head end 2b of said filter body 2.

Preferably, the side wall 3a of the tubular body 3 of the filter body 2 comprises:
- a section free from side openings extending over a distance equal to 15-40% of the longitudinal length of said side wall 3a of the tubular body 3 of said filter body 2 starting from said second head end 2b of said filter body 2 and/or
- a section free from side openings extending over a distance equal to 10-25% of the longitudinal length of said side wall 3a of the tubular body 3 of said filter body 2 starting from said first head end 2a of said filter body 2.

Preferably, the filter 1 comprises a by-pass means for identifying a by-pass path 27 suitable for connecting the supply chamber 10 to the at least one hydraulic fluid outlet 5 by by-passing the filtering cartridge 6.

In accordance with the illustrated embodiment, the aforesaid by-pass means comprising:
- a tubular body 25, extending over a predefined longitudinal section X-X, inside which, in parallel to a central through channel 26 that identifies a section of path for the hydraulic fluid from the supply chamber 10 to the first chamber 9a inside said filtering cartridge 6, there is identified a by-pass path 27 that allows the supply chamber 10 to be put in fluid connection with the at least one outlet 5 without passing through the tubular layer of filtering material 8 of the filtering cartridge 6, a shutter seat 20 being identified in said by-pass path;
- a shutter 23 movably housed and guided in said by-pass path 27 from and towards a fluid-tight advanced closing position with said shutter seat 20, the hydraulic fluid pressure in said supply chamber acting in the sense of moving said shutter 23 away from said shutter seat 20 and restoring the circulation of hydraulic fluid in said by-pass path 27 and
- elastic means 24 positioned to act on said shutter 23 with a predefined elastic load and push it towards said fluid-tight advanced closing position with said shutter seat 20, the action of said spring being in use intended to contrast the action exerted on said shutter 23 by pressurised fluid contained in said supply chamber 10,
in use the aforesaid shutter 23 being intended to move backwards from the shutter seat 20 when the pressure of the pressurised hydraulic fluid acting on said shutter 23 is greater than the force exerted by said elastic means 24.

Advantageously, the aforesaid by-pass means are associated with the filter body 2 in proximity to the supply chamber 10.

Preferably, with reference to the hydraulic fluid travelling direction in the filter 1 from the inlet 4 to the at least one outlet 5, said by-pass path is positioned:
- upstream of the filtering cartridge 6,
- downstream of the supply chamber 10 and
- downstream of the aforesaid hydraulic fluid interception means provided to create resistance to the passage of hydraulic fluid in order to contrast, slow down and/or prevent the emptying of hydraulic fluid from said supply chamber 10 towards said first chamber 9a internal to said filtering cartridge 6.

In accordance with the illustrated embodiment:
- the by-pass path 27 is identified by an annular peripheral channel 27 placed coaxially outside said central through channel 26;
- the aforesaid shutter seat 20 is an annular seat obtained in said annular peripheral channel 27 of the tubular body 25 which identifies a by-pass passage;
- the shutter 23 is an annular shutter suitable for fitting the shutter seat 20 which is annular and
- the aforesaid elastic means 24 are arranged to act circumferentially along the annular shutter 23.

Preferably, the aforesaid elastic means 24 are helical springs distributed circumferentially along the circumference of the annular shutter 23.

In accordance with non-illustrated embodiments, said elastic means may comprise a wave spring, extending circumferentially below the shutter, or may comprise a layer of elastically compressible material.

Preferably, such helical springs 24 are held in place by a respective internal pin 28 having a smaller length than the stroke of the annular shutter from and towards the shutter seat 20.

Preferably, the shutter 23 is provided with sealing means carried to contact said shutter seat 20.

In particular:

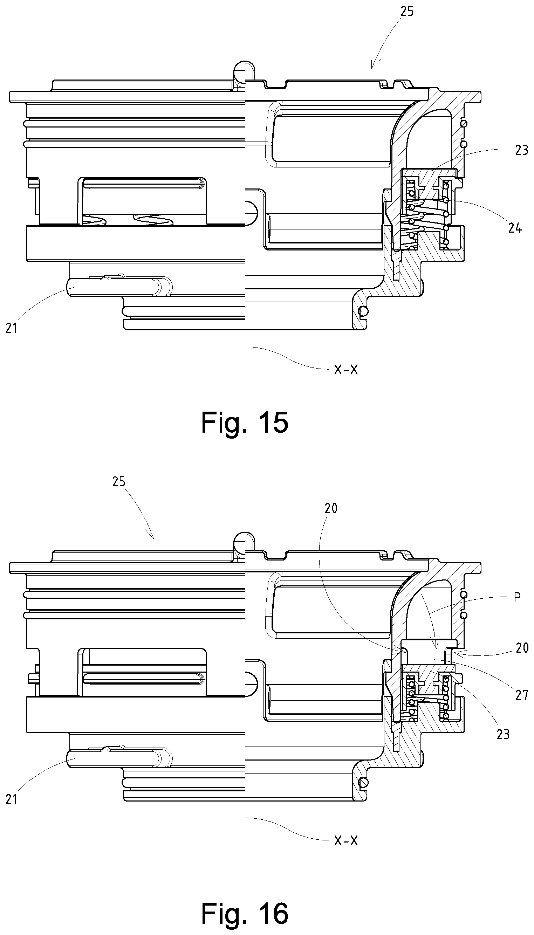

- figure 15 illustrates a "normal" operating condition in which the elastic means 24 keeps the annular shutter 23 in abutment against the annular seat 20 preventing the passage of hydraulic fluid, while

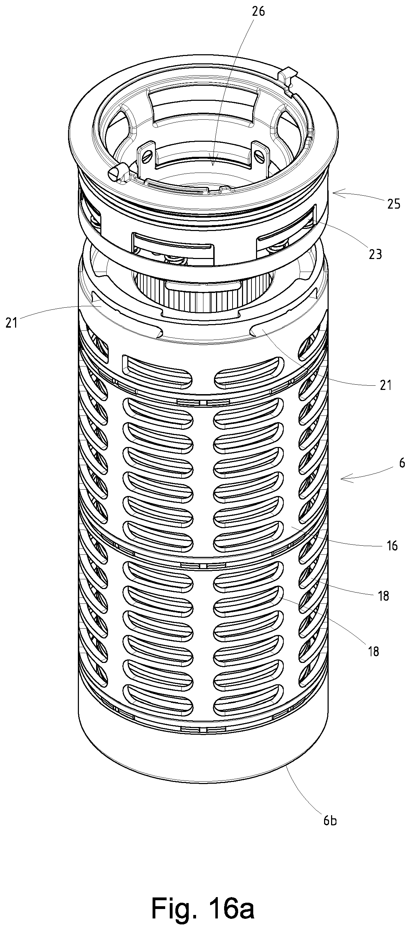

- figure 16 illustrates an operating condition that can occur when the pressure of the hydraulic fluid has increased to the point of exerting on the shutter 23 a force greater than the force exerted on said shutter 23 by the elastic means 24, so that the annular shutter 23 is moved backwards from the annular seat 20 opening the by-pass path 27 so as to allow the passage of a flow of hydraulic fluid (schematically indicated by the arrow P in figure 16) towards the at least one outlet 5 by-passing the tubular layer of filtering material 8 of the filtering cartridge 6.

It is worth pointing out that, even in the aforesaid operating condition with the by-pass path open, the hydraulic fluid must pass through the aforesaid structural element 11 positioned sealingly between the supply chamber 10 and the first chamber 9a, so as to be subjected to at least one coarse filtering action.

In accordance with the illustrated embodiment, the first head end 6a of the cartridge 6 is removably coupled, by means of quick coupling connection means, in the example bayonet coupling means 21, with a head end (in the figures it is the lower end) of the tubular body 25 inside which the by-pass path 27 is identified (see figure 16a).

As can be appreciated from what has been described, the filter for hydraulic fluids according to the invention allows to meet the aforesaid needs and at the same time to overcome the drawbacks referred to in the introductory part of the present description with reference to the filters of the prior art.

In particular, it was found that:
- the presence of the aforesaid hydraulic fluid interception means, such as for example a structure with calibrated holes or a net, allows to create a force resistant to the passage of oil allowing the oil to incorporate the air present inside the aforesaid supply chamber in the first start-up cycles, preventing the continuous formation of air bubbles during the use of the filter;
- the structural element 11 positioned sealingly between the supply chamber 10 and the first chamber 9a and its structure with calibrated passages/holes allows it to perform the task of pre-filtering element with respect to the filtering cartridge 6, so as to avoid re-circulating totally unfiltered hydraulic fluid in the event of opening of the by-pass valve;
- the presence of the aforesaid hydraulic fluid outlet openings 5 obtained in the side wall 3a of the tubular body 3 of the filter body 2, thanks to the presence of holes with decreasing diameters/dimensions towards the supply chamber 10, allows a high flow rate of hydraulic fluid to be disposed of in the first working step of the filter following a start-up of the hydraulic system of a machine, since the smaller holes, placed closer to the collection chamber 10, allow any air that is displaced, particularly during the initial transient, to be disposed of with the volume of oil;
- the second tubular element 16 of the filtering cartridge 6 identifies a gap with respect to the side wall 3a of the tubular body 3 of the filter body 2 to allow to the oil escaping from the first tubular support element 14 to reduce its speed in the face of an increase in the passage section of the second tubular element 16 of the filtering cartridge 6 with respect to the first tubular element 14 of said filtering cartridge 6, moreover the aforesaid second tubular element 16 also performs the task of supporting and hooking to the head ends of the filtering cartridge 6.
Obviously, a person skilled in the art may make numerous modifications and variations to the filter for hydraulic fluids described above so as to satisfy contingent and specific requirements, all of which are contained in the scope of protection of the invention as defined by the following claims.

## Claims

1. **A filter (1) for hydraulic fluids for hydraulic circuits** comprising a closed filter body (2) and at least one filtering cartridge (6), wherein:
- said filter body (2) comprises a tubular body (3) delimited by a side wall (3a) and extending longitudinally along a predefined axial direction (X-X) from a first head end (2a) to a second distal head end (2b);
- said filter body (2) comprises at least one hydraulic fluid inlet (4) in communication with a supply chamber (10) positioned at said first head end (2a);
- said filter body (2) comprises at least one hydraulic fluid outlet (5) positioned in a substantially median portion of said side wall (3a) of the tubular body (3);
- a compartment (9) is identified in said tubular body (3) of said filter body (2), in fluid communication with said supply chamber (10), intended to removably house said filtering cartridge (6);
- said filtering cartridge (6) comprises a tubular body extending longitudinally along said predefined axial direction (X-X) from a first head end (6a), connected in fluid-tight communication with said supply chamber (10), to a second head end (6b) closed by a bottom (7);
- said tubular body of said filtering cartridge (6) comprises a continuous tubular layer (8) of filtering material suitable for being crossed by a pressurised hydraulic fluid for performing a filtering action on said pressurised hydraulic fluid;
- said filtering cartridge (6) is housed and supported removably in said compartment (9) of said tubular body (3) of said filter body (2), and
- said continuous tubular layer of filtering material (8) subdivides said housing compartment (9):
• into a first chamber (9a) internal to said continuous tubular layer of filtering material (8) and in fluid-tight communication with said supply chamber (10) and
• into a remaining external portion comprised between said tubular layer of filtering material (8) and said side wall (3a) of the tubular body (3),
said continuous tubular layer of filtering material (8) of said filtering cartridge (6) being configured and positioned in said filter body (2) to be interposed in a hydraulic fluid path between said inlet opening (4) and said at least one outlet opening (5) and to be crossed by the hydraulic fluid and to carry out the filtering action thereon, causing the filtration of hydraulic fluid entering said filter body (2) through said at least one inlet opening (4) and exiting from said filter body (2) through said at least one outlet opening (5), wherein:
- said filtering cartridge (6) comprises a first tubular support element (14) circumscribed about said continuous tubular layer of filtering material (8) for exerting on said continuous tubular layer of filtering material (8) a containment/encircling action, in order to preserve the geometry of said continuous tubular layer of filtering material (8) also in the presence of pressurised hydraulic fluid, and
- said first tubular support element (14) comprises a plurality of passages (15) in order to be crossed by a flow of hydraulic fluid transiting through said continuous tubular layer of filtering material (8),
**characterised in that** said filtering cartridge (6) also comprises a second tubular element (16):
- circumscribed about said first tubular support element (14);
- spaced at a predefined distance from said first tubular support element (14) and
- comprising a plurality of passages (18) in order to allow to be crossed by a flow of hydraulic fluid transiting through said continuous tubular layer of filtering material (8) and through said first tubular support element (14),
said second tubular element (16) subdividing said remaining external portion of said compartment (9) comprised between said tubular layer of filtering material (8) and said side wall (3a) of the tubular body (3):
- into a first intermediate chamber (9b) comprised between said tubular layer of filtering material (8) and said second tubular element (16) and
- into an external chamber (9c) comprised between said second tubular element (16) and said side wall (3a) of the tubular body (3) of said filter body 2,
said second tubular element (16) acting in said filter (1) as a diffuser for slowing down the hydraulic fluid and reducing turbulence.

2. The filter (1) according to claim 1, wherein:
- said passages (15) of said first tubular element (14) are shaped so as to identify oblong slots extending with a circumferential pattern along the wall of said first tubular element (14) and
- said passages (18) of said second tubular element (16) are shaped so as to identify oblong slots extending with a circumferential pattern along the wall of said second tubular element (16).

3. The filter (1) according to claim 1 or 2, wherein said passages (15) of said first tubular element (14) and said passages (18) of said second tubular element (16) are shaped so as to identify oblong slots extending with a circumferential pattern along the respective tubular element (14, 16).

4. The filter (1) according to any one of claims 1 to 3, wherein said passages (18) of said second tubular element (16):
- identify overall a larger passage area, preferably at least 25% larger, than the passage area identified overall by said passages of said first tubular element (14) and/or
- have larger dimensions, preferably at least 25% larger, than the dimensions of said passages of said first tubular element (14).

5. The filter (1) according to any one of claims 1 to 4, wherein said filtering cartridge (6) comprises:
- an end annular support element (19) provided with means for coupling and fixing to a remaining part of the filter (1) and
- an opposing closing bottom (7),
wherein said annular support element (19) and said opposing closing bottom (7) identify said first head end (6a) and said second head end (6b), respectively, of said filtering cartridge (6) between which said first tubular element (14) and said second tubular element (16) extend longitudinally.

6. The filter (1) according to claim 5, wherein said means for coupling and fixing said annular support element (19) to a remaining part of the filter (1) are quick-fit coupling means, preferably said means for coupling and fixing said annular support element (19) to a remaining part of the filter (1) are quick-fit coupling means with bayonet coupling (21).

7. The filter (1) according to claim 5, wherein said first tubular element (14) and said second tubular element (16) have respective head ends firmly coupled, preferably removably and/or by means of quick coupling means, to said annular end support element (19) and to said closing bottom (7).

8. The filter (1) according to any one of claims 1 to 7, wherein said filter body (2) comprises a fixing portion, preferably a fixing portion (29) positioned in proximity to said first head end (2a), to enable a stable and firm fixing of said filter body (2) inside a tank (S) for the storage/collection of hydraulic fluid.

9. The filter (1) according to any one of claims 1 to 8, wherein said first head end (6a) of said filtering cartridge (6) comprises a quick-fit coupling means with a bayonet connection (21) for the removable fixing of said filtering cartridge (6) inside said filter body (2).

10. The filter (1) according to any one of claims 1 to 9, wherein said first head end (2a) and said second head end (2b) distal from the filter body (2) constitute the upper end and the lower end of the filter (1), respectively.

11. The filter (1) according to any one of claims 1 to 10, wherein said first chamber (9a) internal to said filtering cartridge (6) is connected in hydraulic fluid communication with said supply chamber (10) of said filter body (2) by the interposition of hydraulic fluid interception means provided to create resistance to the passage of hydraulic fluid in order to contrast, slow down and/or prevent the emptying of hydraulic fluid from said supply chamber (10) towards said first chamber (9a) internal to said filtering cartridge (6).

12. The filter (1) according to any one of claims 1 to 11, wherein said at least one hydraulic fluid outlet (5) comprises a plurality of through openings (5), preferably circular holes, obtained in said side wall (3a) of the tubular body (3) of said filter body (2), said plurality of through openings (5):
- being distributed over a predefined longitudinal section of said side wall (3a) and
- having larger dimensions in proximity to said second distal head end (2b) of said filter body (2) and smaller dimensions in proximity to said first head end (2a) of said filter body (2).

13. The filter (1) according to claim 12, wherein said plurality of through openings (5) has a decreasing pattern proceeding longitudinally along said side wall (3a) of the tubular body (3) of said filter body (2) from said second head end (2b) of said filter body (2) towards said first head end (2a) of said filter body (2), preferably the aforesaid decreasing distribution of said openings (5) is formed by a succession of longitudinal sections of side wall (3) in which:
- inside the same longitudinal section of side wall (3a) of the tubular body (3) of said filter body (2), the through openings (5) have substantially equal dimensions and
- a longitudinal section of side wall (3a) of the tubular body (3) of said filter body (2) more proximal to said first head end (2a) of said filter body (2) has through openings substantially with the same smaller dimension than the dimension of the through openings (5) of a longitudinal section of side wall (3a) of the tubular body (3) of said filter body (2) more proximal to said second head end (2b) of said filter body (2).

14. The filter (1) according to claim 12 or 13, wherein the side wall (3a) of the tubular body (3) of said filter body (2) comprises:
- a section free from side openings extending over a distance equal to 15-40% of the longitudinal length of said side wall (3a) of the tubular body (3) of said filter body (2) starting from said second head end (2b) of said filter body (2) and/or
- a section free from side openings extending over a distance equal to 10-25% of the longitudinal length of said side wall (3a) of the tubular body (3) of said filter body (2) starting from said first head end (2a) of said filter body (2).

15. The filter (1) according to any one of claims 1 to 14, comprising a by-pass means for identifying a by-pass path (27) suitable for connecting said supply chamber (10) to said at least one hydraulic fluid outlet (5) by by-passing said filtering cartridge (6), said by-pass means comprising:
- a tubular body (25) inside which a by-pass path (27) is identified from said supply chamber (10) to said at least one hydraulic fluid outlet (5), a shutter seat (20) being identified in said by-pass path (27);
- a shutter (23) movably housed and guided in said by-pass path (27) from and towards a fluid-tight advanced closing position with said shutter seat (20), the hydraulic fluid pressure in said supply chamber acting in the sense of moving said shutter (23) away from said shutter seat (20) and restoring the circulation of hydraulic fluid in said by-pass path (27) and
- elastic means (24) positioned to act on said shutter (23) with a predefined elastic load and push it towards said fluid-tight advanced closing position with said shutter seat (20), the action of said spring being in use intended to contrast the action exerted on said shutter (23) by pressurised fluid contained in said supply chamber (10),
in use said shutter (23) being intended to move backwards from said shutter seat (20) when the pressure of the pressurised hydraulic fluid acting on said shutter (23) is greater than the force exerted by said elastic means (24),
**characterised in that** said by-pass means are associated with said filter body (2) in proximity to said first head end (2a) of the filter body (2) where said supply chamber (10) is positioned.
wherein with reference to a hydraulic fluid travelling direction identified in said filter (1) from said inlet (4) to said at least one outlet (5) said by-pass path (27) is positioned:
- upstream of said filtering cartridge (6),
- downstream of said supply chamber (10) and
- downstream of said hydraulic fluid interception means provided to create resistance to the passage of hydraulic fluid in order to contrast, slow down and/or prevent the emptying of hydraulic fluid from said supply chamber (10) towards said first chamber (9a) internal to said filtering cartridge (6).

## Patentansprüche

1. **Filter (1) für Hydraulikfluide für hydraulische Kreisläufe** mit einem geschlossenen Filterkörper (2) und mindestens einer Filterpatrone (6), wobei:
- der Filterkörper (2) einen rohrförmigen Körper (3) umfasst, der durch eine Seitenwand (3a) begrenzt ist und sich in Längsrichtung entlang einer vordefinierten axialen Richtung (X-X) von einem ersten Kopfende (2a) zu einem zweiten distalen Kopfende (2b) erstreckt;
- der Filterkörper (2) mindestens einen Hydraulikfluideinlass (4) in Kommunikation mit einer Versorgungskammer (10) umfasst, die an dem ersten Kopfende (2a) positioniert ist;
- der Filterkörper (2) mindestens einen Hydraulikfluidauslass (5) umfasst, der in einem im Wesentlichen mittleren Abschnitt der Seitenwand (3a) des rohrförmigen Körpers (3) angeordnet ist;
- in dem rohrförmigen Körper (3) des Filterkörpers (2) ein Fach (9) identifiziert ist, das mit der Versorgungskammer (10) in Fluidkommunikation steht und dazu bestimmt ist, die Filterpatrone (6) entfernbar aufzunehmen;
- die Filterpatrone (6) einen rohrförmigen Körper umfasst, der sich in Längsrichtung entlang der vordefinierten axialen Richtung (X-X) von einem ersten Kopfende (6a), das in fluiddichter Kommunikation mit der Versorgungskammer (10) steht, zu einem zweiten Kopfende (6b) erstreckt, das durch einen Boden (7) verschlossen ist;
- der rohrförmige Körper der Filterpatrone (6) eine durchgehende rohrförmige Schicht (8) aus Filtermaterial umfasst, die geeignet ist, von einem unter Druck stehenden Hydraulikfluid durchquert zu werden, um eine Filterwirkung auf das unter Druck stehende Hydraulikfluid auszuüben;
- die Filterpatrone (6) in dem Fach (9) des rohrförmigen Körpers (3) des Filterkörpers (2) untergebracht und entfernbar gelagert ist und
- die durchgehende rohrförmige Schicht aus Filtermaterial (8) das Gehäusefach (9) unterteilt:
• in eine erste Kammer (9a) innerhalb der durchgehenden rohrförmigen Schicht aus Filtermaterial (8) und in fluiddichter Kommunikation mit der Versorgungskammer (10), und
• in einen verbleibenden äußeren Abschnitt, der zwischen der rohrförmigen Schicht aus Filtermaterial (8) und der Seitenwand (3a) des rohrförmigen Körpers (3) enthalten ist,
wobei die durchgehende rohrförmige Schicht aus Filtermaterial (8) der Filterpatrone (6) so konfiguriert und in dem Filterkörper (2) positioniert ist, dass sie in einem Hydraulikfluidweg zwischen der Einlassöffnung (4) und der mindestens einen Auslassöffnung (5) eingefügt ist und von dem Hydraulikfluid gekreuzt wird und die Filterwirkung darauf ausübt, wodurch die Filtration von Hydraulikfluid bewirkt wird, das durch die mindestens eine Einlassöffnung (4) in den Filterkörper (2) eintritt und durch die mindestens eine Auslassöffnung (5) aus dem Filterkörper (2) austritt, wobei:
- die Filterpatrone (6) ein erstes rohrförmiges Stützelement (14) umfasst, das um die durchgehende rohrförmige Schicht aus Filtermaterial (8) herum umschrieben ist, um auf die durchgehende rohrförmige Schicht aus Filtermaterial (8) eine Einschluss-/Umschließungswirkung auszuüben, um die Geometrie der durchgehenden rohrförmigen Schicht aus Filtermaterial (8) auch in Gegenwart von unter Druck stehendem Hydraulikfluid beizubehalten, und
- das erste rohrförmige Stützelement (14) eine Vielzahl von Durchgängen (15) umfasst, um von einem Strom von Hydraulikfluid durchquert zu werden, der durch die durchgehende rohrförmige Schicht aus Filtermaterial (8) strömt,
**dadurch gekennzeichnet, dass** die Filterpatrone (6) auch ein zweites rohrförmiges Element (16) umfasst:
- das um das erste rohrförmige Stützelement (14) herum umschrieben ist;
- in einem vordefinierten Abstand von dem ersten rohrförmigen Stützelement (14) beabstandet ist und
- umfassend eine Vielzahl von Durchgängen (18), um es zu ermöglichen, von einem Strom von Hydraulikfluid durchquert zu werden, der durch die durchgehende rohrförmige Schicht aus Filtermaterial (8) und durch das erste rohrförmige Stützelement (14) strömt,
wobei das zweite rohrförmige Element (16) den verbleibenden äußeren Abschnitt des Fachs (9), das zwischen der rohrförmigen Schicht aus Filtermaterial (8) und der Seitenwand (3a) des rohrförmigen Körpers (3) enthalten ist, unterteilt:
- in eine erste Zwischenkammer (9b), die zwischen der rohrförmigen Schicht aus Filtermaterial (8) und dem zweiten rohrförmigen Element (16) enthalten ist und
- in eine äußere Kammer (9c), die zwischen dem zweiten rohrförmigen Element (16) und der Seitenwand (3a) des rohrförmigen Körpers (3) des Filterkörpers (2) enthalten ist,
wobei das zweite rohrförmige Element (16) in dem Filter (1) als Diffusor wirkt, um das Hydraulikfluid zu verlangsamen und Turbulenzen zu reduzieren.

2. Filter (1) nach Anspruch 1, wobei:
- die Durchgänge (15) des ersten rohrförmigen Elements (14) so geformt sind, dass sie längliche Schlitze identifizieren, die sich in einem Umfangsmuster entlang der Wand des ersten rohrförmigen Elements (14) erstrecken, und
- die Durchgänge (18) des zweiten rohrförmigen Elements (16) so geformt sind, dass sie längliche Schlitze identifizieren, die sich in einem Umfangsmuster entlang der Wand des zweiten rohrförmigen Elements (16) erstrecken.

3. Filter (1) nach Anspruch 1 oder 2, wobei die Durchgänge (15) des ersten rohrförmigen Elements (14) und die Durchgänge (18) des zweiten rohrförmigen Elements (16) so geformt sind, dass sie längliche Schlitze identifizieren, die sich in einem Umfangsmuster entlang des jeweiligen rohrförmigen Elements (14, 16) erstrecken.

4. Filter (1) nach einem der Ansprüche 1 bis 3, wobei die Durchgänge (18) des zweiten rohrförmigen Elements (16):
- insgesamt eine größere Durchgangsfläche, vorzugsweise mindestens 25% größer, als die Durchgangsfläche, die insgesamt durch die Durchgänge des ersten rohrförmigen Elements (14) identifiziert ist, identifizieren und/oder
- größere Abmessungen, vorzugsweise mindestens 25 % größer, als die Abmessungen der Durchgänge des ersten rohrförmigen Elements (14) aufweisen.

5. Filter (1) nach einem der Ansprüche 1 bis 4, wobei die Filterpatrone (6) umfasst:
- ein stirnseitiges ringförmiges Stützelement (19), das mit Mitteln zum Ankoppeln und Befestigen an einem verbleibenden Teil des Filters (1) versehen ist, und
- einen gegenüberliegenden Verschlussboden (7),
wobei das ringförmige Stützelement (19) und der gegenüberliegende Verschlussboden (7) das erste Kopfende (6a) bzw. das zweite Kopfende (6b) der Filterpatrone (6) identifizieren, zwischen denen sich das erste rohrförmige Element (14) und das zweite rohrförmige Element (16) in Längsrichtung erstrecken.

6. Filter (1) nach Anspruch 5, wobei die Mittel zum Ankoppeln und Befestigen des ringförmigen Stützelements (19) an einem verbleibenden Teil des Filters (1) Schnellkupplungsmittel sind, wobei vorzugsweise die Mittel zum Ankoppeln und Befestigen des ringförmigen Stützelements (19) an einem verbleibenden Teil des Filters (1) Schnellkupplungsmittel mit Bajonettkupplung (21) sind.

7. Filter (1) nach Anspruch 5, wobei das erste rohrförmige Element (14) und das zweite rohrförmige Element (16) jeweilige Kopfenden aufweisen, die fest, vorzugsweise entfernbar und/oder mittels Schnellkupplungsmitteln, mit dem stirnseitigen ringförmigen Stützelement (19) und dem Verschlussboden (7) gekoppelt sind.

8. Filter (1) nach einem der Ansprüche 1 bis 7, wobei der Filterkörper (2) einen Befestigungsabschnitt, vorzugsweise einen Befestigungsabschnitt (29), umfasst, der in der Nähe des ersten Kopfendes (2a) positioniert ist, um eine stabile und feste Befestigung des Filterkörpers (2) innerhalb eines Tanks (S) zum Speichern/Sammeln von Hydraulikfluid zu ermöglichen.

9. Filter (1) nach einem der Ansprüche 1 bis 8, wobei das erste Kopfende (6a) der Filterpatrone (6) ein Schnellkupplungsmittel mit einer Bajonettverbindung (21) zur entfernbaren Befestigung der Filterpatrone (6) innerhalb des Filterkörpers (2) umfasst.

10. Filter (1) nach einem der Ansprüche 1 bis 9, wobei das erste Kopfende (2a) und das zweite Kopfende (2b), die von dem Filterkörper (2) distal sind, das obere Ende bzw. das untere Ende des Filters (1) identifizieren.

11. Filter (1) nach einem der Ansprüche 1 bis 10, wobei die erste Kammer (9a) innerhalb der Filterpatrone (6) in Hydraulikfluidkommunikation mit der Versorgungskammer (10) des Filterkörpers (2) durch die Zwischenschaltung von Hydraulikfluidabfangmitteln verbunden ist, die bereitgestellt sind, um einen Widerstand gegen den Durchgang von Hydraulikfluid zu erzeugen, um das Entleeren von Hydraulikfluid aus der Versorgungskammer (10) in Richtung der ersten Kammer (9a) innerhalb der Filterpatrone (6) zu kontrastieren, zu verlangsamen und/oder zu verhindern.

12. Filter (1) nach einem der Ansprüche 1 bis 11, wobei der mindestens eine Hydraulikfluidauslass (5) eine Vielzahl von Durchführungsöffnungen (5), vorzugsweise kreisförmige Löcher, umfasst, die in der Seitenwand (3a) des rohrförmigen Körpers (3) des Filterkörpers (2) erhalten werden, wobei die Vielzahl von Durchführungsöffnungen (5):
- über einen vordefinierten Längsabschnitt der Seitenwand (3a) verteilt ist und
- größere Abmessungen in der Nähe des zweiten distalen Kopfendes (2b) des Filterkörpers (2) und kleinere Abmessungen in der Nähe des ersten Kopfendes (2a) des Filterkörpers (2) aufweist.

13. Filter (1) nach Anspruch 12, wobei die Vielzahl von Durchführungsöffnungen (5) ein abnehmendes Muster aufweist, das in Längsrichtung entlang der Seitenwand (3a) des rohrförmigen Körpers (3) des Filterkörpers (2) von dem zweiten Kopfende (2b) des Filterkörpers (2) zu dem ersten Kopfende (2a) des Filterkörpers (2) ausgeht, wobei vorzugsweise die vorstehend genannte abnehmende Verteilung der Öffnungen (5) durch eine Abfolge von Längsabschnitten der Seitenwand (3) gebildet wird, in der:
- innerhalb des gleichen Längsabschnitts der Seitenwand (3a) des rohrförmigen Körpers (3) des Filterkörpers (2) die Durchführungsöffnungen (5) im Wesentlichen gleiche Abmessungen aufweisen und
- ein Längsabschnitt der Seitenwand (3a) des rohrförmigen Körpers (3) des Filterkörpers (2), der proximaler zu dem ersten Kopfende (2a) des Filterkörpers (2) liegt, Durchführungsöffnungen aufweist, die im Wesentlichen die gleiche kleinere Abmessung aufweisen als die Abmessung der Durchführungsöffnungen (5) eines Längsabschnitts der Seitenwand (3a) des rohrförmigen Körpers (3) des Filterkörpers (2), der proximaler zu dem zweiten Kopfende (2b) des Filterkörpers (2) liegt.

14. Filter (1) nach Anspruch 12 oder 13, wobei die Seitenwand (3a) des rohrförmigen Körpers (3) des Filterkörpers (2) Folgendes umfasst:
- einen von seitlichen Öffnungen freien Abschnitt, der sich über eine Strecke ausdehnt, die 15-40% des Längenmaßes der Seitenwand (3a) des rohrförmigen Körpers (3) des Filterkörpers (2) ausgehend von dem zweiten Kopfende (2b) des Filterkörpers (2) entspricht und/oder
- einen von seitlichen Öffnungen freien Abschnitt, der sich über eine Strecke ausdehnt, die 10-25 % des Längenmaßes der Seitenwand (3a) des rohrförmigen Körpers (3) des Filterkörpers (2) ausgehend von dem ersten Kopfende (2a) des Filterkörpers (2) entspricht.

15. Filter (1) nach einem der Ansprüche 1 bis 14, umfassend Umgehungsmittel zum Identifizieren eines Umgehungswegs (27), der geeignet ist, die Versorgungskammer (10) mit dem mindestens einen Hydraulikfluidauslass (5) durch Umgehen der Filterpatrone (6) zu verbinden,
wobei die Umgehungsmittel Folgendes umfassen:
- einen rohrförmigen Körper (25), in dem ein Umgehungsweg (27) von der Versorgungskammer (10) zu dem mindestens einen Hydraulikfluidauslass (5) identifiziert ist, wobei ein Klappensitz (20) in dem Umgehungsweg (27) identifiziert ist;
- eine Klappe (23), die beweglich in dem Umgehungsweg (27) von und zu einer fluiddichten vorgeschobenen Schließposition mit dem Klappensitz (20) aufgenommen und geführt ist, wobei der Hydraulikfluiddruck in der Versorgungskammer in der Richtung der Bewegung der Klappe (23) von dem Klappensitz (20) wegführend und zur Wiederherstellung der Zirkulation von Hydraulikfluid in dem Umgehungsweg (27) wirkt, und
- elastische Mittel (24), die so positioniert sind, dass sie mit einer vordefinierten elastischen Last auf die Klappe (23) einwirken und sie in Richtung der fluiddichten vorgeschobenen Schließposition mit dem Klappensitz (20) drücken, wobei die Wirkung der Feder im Gebrauch dazu bestimmt ist, der Wirkung entgegenzuwirken, die auf die Klappe (23) durch unter Druck stehendes Fluid ausgeübt wird, das in der Versorgungskammer (10) enthalten ist,
wobei die Klappe (23) im Gebrauch dazu bestimmt ist, sich von dem Klappensitz (20) nach hinten zu bewegen, wenn der Druck des unter Druck stehenden Hydraulikfluids, das auf die Klappe (23) wirkt, größer ist als die Kraft, die durch die elastischen Mittel (24) ausgeübt wird,
**dadurch gekennzeichnet, dass** die Umgehungsmittel mit dem Filterkörper (2) in der Nähe des ersten Kopfendes (2a) des Filterkörpers (2) assoziiert sind, wo die Versorgungskammer (10) positioniert ist.
wobei unter Bezugnahme auf eine in dem Filter (1) von dem Einlass (4) zu dem mindestens einen Auslass (5) identifizierte Hydraulikfluidlaufrichtung der Umgehungsweg (27) positioniert ist:
- stromaufwärts der Filterpatrone (6),
- stromabwärts der Versorgungskammer (10) und
- stromabwärts der Hydraulikfluidabfangmittel, die vorgesehen sind, um einen Widerstand gegen den Durchgang von Hydraulikfluid zu erzeugen, um das Entleeren von Hydraulikfluid aus der Versorgungskammer (10) in Richtung der ersten Kammer (9a) innerhalb der Filterpatrone (6) zu kontrastieren, zu verlangsamen und/oder zu verhindern.

## Revendications

1. **Filtre (1) pour des fluides hydrauliques pour des circuits hydrauliques** comprenant un corps (2) de filtre fermé et au moins une cartouche filtrante (6), dans lequel :
- ledit corps (2) de filtre comprend un corps tubulaire (3) délimité par une paroi latérale (3a) et s'étendant longitudinalement le long d'une direction axiale prédéfinie (X-X) d'une première extrémité de tête (2a) à une seconde extrémité de tête distale (2b) ;
- ledit corps (2) de filtre comprend au moins une entrée (4) de fluide hydraulique en communication avec une chambre d'alimentation (10) positionnée au niveau de ladite première extrémité de tête (2a) ;
- ledit corps (2) de filtre comprend au moins une sortie (5) de fluide hydraulique positionnée dans une partie sensiblement médiane de ladite paroi latérale (3a) du corps tubulaire (3) ;
- un compartiment (9) est identifié dans ledit corps tubulaire (3) dudit corps (2) de filtre, en communication fluidique avec ladite chambre d'alimentation (10), destiné à loger de manière amovible ladite cartouche filtrante (6) ;
- ladite cartouche filtrante (6) comprend un corps tubulaire s'étendant longitudinalement le long de ladite direction axiale prédéfinie (X-X) à partir d'une première extrémité de tête (6a), reliée en communication étanche avec ladite chambre d'alimentation (10), jusqu'à une seconde extrémité de tête (6b) fermée par un fond (7) ;
- ledit corps tubulaire de ladite cartouche filtrante (6) comprend une couche tubulaire continue (8) de matériau filtrant apte à être traversée par un fluide hydraulique sous pression pour effectuer une action de filtrage sur ledit fluide hydraulique sous pression ;
- ladite cartouche filtrante (6) est logée et supportée de manière amovible dans ledit compartiment (9) dudit corps tubulaire (3) dudit corps (2) de filtre, et
- ladite couche tubulaire continue de matériau filtrant (8) subdivise ledit compartiment de logement (9) :
• en une première chambre (9a) interne à ladite couche tubulaire continue de matériau filtrant (8) et en communication étanche avec ladite chambre d'alimentation (10) et
• en une partie externe restante comprise entre ladite couche tubulaire de matériau filtrant (8) et ladite paroi latérale (3a) du corps tubulaire (3),
ladite couche tubulaire continue de matériau filtrant (8) de ladite cartouche filtrante (6) étant configurée et positionnée dans ledit corps (2) de filtre pour être interposée dans un trajet de fluide hydraulique entre ladite ouverture d'entrée (4) et ladite au moins une ouverture de sortie (5) et pour être traversée par le fluide hydraulique et pour effectuer l'action de filtrage sur celui-ci, provoquant la filtration du fluide hydraulique entrant dans ledit corps (2) de filtre par ladite au moins une ouverture d'entrée (4) et sortant dudit corps (2) de filtre par ladite au moins une ouverture de sortie (5), dans lequel :
- ladite cartouche filtrante (6) comprend un premier élément de support tubulaire (14) circonscrit autour de ladite couche tubulaire continue de matériau filtrant (8) pour exercer sur ladite couche tubulaire continue de matériau filtrant (8) une action de confinement/encerclement, afin de préserver la géométrie de ladite couche tubulaire continue de matériau filtrant (8) même en présence d'un fluide hydraulique sous pression, et
- ledit premier élément de support tubulaire (14) comprend une pluralité de passages (15) afin d'être traversé par un flux de fluide hydraulique transitant à travers ladite couche tubulaire continue de matériau filtrant (8),
**caractérisée en ce que** ladite cartouche filtrante (6) comprend également un second élément tubulaire (16) :
- circonscrit autour dudit premier élément de support tubulaire (14) ;
- espacé à une distance prédéfinie dudit premier élément de support tubulaire (14) et
- comprenant une pluralité de passages (18) afin d'être traversé par un flux de fluide hydraulique transitant à travers ladite couche tubulaire continue de matériau filtrant (8) et à travers ledit premier élément de support tubulaire (14),
ledit second élément tubulaire (16) subdivisant ladite partie externe restante dudit compartiment (9) comprise entre ladite couche tubulaire de matériau filtrant (8) et ladite paroi latérale (3a) du corps tubulaire (3) :
- en une première chambre intermédiaire (9b) comprise entre ladite couche tubulaire de matériau filtrant (8) et ledit second élément tubulaire (16) et
- en une chambre externe (9c) comprise entre ledit second élément tubulaire (16) et ladite paroi latérale (3a) du corps tubulaire (3) dudit corps (2) de filtre,
ledit second élément tubulaire (16) agissant dans ledit filtre (1) comme un diffuseur pour ralentir le fluide hydraulique et réduire les turbulences.

2. Filtre (1) selon la revendication 1, dans lequel :
- lesdits passages (15) dudit premier élément tubulaire (14) sont façonnés de manière à identifier des fentes oblongues s'étendant selon un motif circonférentiel le long de la paroi dudit premier élément tubulaire (14) et
- lesdits passages (18) dudit second élément tubulaire (16) sont façonnés de manière à identifier des fentes oblongues s'étendant selon un motif circonférentiel le long de la paroi dudit second élément tubulaire (16).

3. Filtre (1) selon la revendication 1 ou 2, lesdits passages (15) dudit premier élément tubulaire (14) et lesdits passages (18) dudit second élément tubulaire (16) étant façonnés de manière à identifier des fentes oblongues s'étendant avec un motif circonférentiel le long de l'élément tubulaire (14, 16) respectif.

4. Filtre (1) selon l'une quelconque des revendications 1 à 3, dans lequel lesdits passages (18) dudit second élément tubulaire (16) :
- identifient globalement une zone de passage plus grande, de préférence au moins 25 % plus grande, que la zone de passage identifiée globalement par lesdits passages dudit premier élément tubulaire (14) et/ou
- ont des dimensions plus grandes, de préférence au moins 25 % plus grandes, que les dimensions desdits passages dudit premier élément tubulaire (14).

5. Filtre (1) selon l'une quelconque des revendications 1 à 4, ladite cartouche filtrante (6) comprenant :
- un élément de support annulaire d'extrémité (19) pourvu de moyens d'accouplement et de fixation à une partie restante du filtre (1) et
- un fond de fermeture opposé (7),
ledit élément de support annulaire (19) et ledit fond de fermeture opposé (7) identifiant, respectivement, ladite première extrémité de tête (6a) et ladite seconde extrémité de tête (6b), de ladite cartouche filtrante (6) entre lesquelles ledit premier élément tubulaire (14) et ledit second élément tubulaire (16) s'étendent dans le sens de la longueur.

6. Filtre (1) selon la revendication 5, lesdits moyens d'accouplement et de fixation dudit élément de support annulaire (19) à une partie restante du filtre (1) étant des moyens de raccord rapide, de préférence lesdits moyens d'accouplement et de fixation dudit élément de support annulaire (19) à une partie restante du filtre (1) étant des moyens de raccord rapide avec accouplement à baïonnette (21).

7. Filtre (1) selon la revendication 5, ledit premier élément tubulaire (14) et ledit second élément tubulaire (16) comportant des extrémités de tête respectives fermement couplées, de préférence de manière amovible et/ou à l'aide de moyens de raccord rapide, audit élément de support d'extrémité annulaire (19) et audit fond de fermeture (7).

8. Filtre (1) selon l'une quelconque des revendications 1 à 7, ledit corps (2) de filtre comprenant une partie de fixation, de préférence une partie de fixation (29) positionnée à proximité de ladite première extrémité de tête (2a), pour permettre une fixation stable et ferme dudit corps (2) de filtre à l'intérieur d'un réservoir (S) pour le stockage/la collecte d'un fluide hydraulique.

9. Filtre (1) selon l'une quelconque des revendications 1 à 8, ladite première extrémité (6a) de ladite cartouche filtrante (6) comprenant des moyens de raccord rapide avec une raccordement à baïonnette (21) pour la fixation amovible de ladite cartouche filtrante (6) à l'intérieur dudit corps (2) de filtre.

10. Filtre (1) selon l'une quelconque des revendications 1 à 9, ladite première extrémité de tête (2a) et ladite seconde extrémité de tête (2b) distale du corps (2) de filtre constituant, respectivement, l'extrémité supérieure et l'extrémité inférieure du filtre (1).

11. Filtre (1) selon l'une quelconque des revendications 1 à 10, ladite première chambre (9a) interne à ladite cartouche filtrante (6) étant reliée en communication fluidique hydraulique avec ladite chambre d'alimentation (10) dudit corps (2) de filtre par l'interposition de moyens d'interception du fluide hydraulique prévus pour créer une résistance au passage du fluide hydraulique afin de s'opposer, ralentir et/ou empêcher la vidange du fluide hydraulique de ladite chambre d'alimentation (10) vers ladite première chambre (9a) interne à ladite cartouche filtrante (6).

12. Filtre (1) selon l'une quelconque des revendications 1 à 11, ladite au moins une sortie (5) de fluide hydraulique comprenant une pluralité d'ouvertures traversantes (5), de préférence des trous circulaires, obtenues dans ladite paroi latérale (3a) du corps tubulaire (3) dudit corps (2) de filtre, ladite pluralité d'ouvertures traversantes (5) :
- étant réparties sur une section longitudinale prédéfinie de ladite paroi latérale (3a) et
- ayant des dimensions plus grandes à proximité de ladite seconde extrémité de tête distale (2b) dudit corps (2) de filtre et des dimensions plus petites à proximité de ladite première extrémité de tête (2a) dudit corps (2) de filtre.

13. Filtre (1) selon la revendication 12, ladite pluralité d'ouvertures traversantes (5) présentant une distribution décroissante s'étendant longitudinalement le long de ladite paroi latérale (3a) du corps tubulaire (3) dudit corps (2) de filtre à partir de ladite seconde extrémité de tête (2b) dudit corps (2) de filtre vers ladite première extrémité de tête (2a) dudit corps (2) de filtre, de préférence la distribution décroissante susmentionnée desdites ouvertures (5) est formée par une succession de sections longitudinales de la paroi latérale (3) où :
- à l'intérieur de la même section longitudinale de la paroi latérale (3a) du corps tubulaire (3) dudit corps (2) de filtre, les ouvertures traversantes (5) ont des dimensions sensiblement égales et
- une section longitudinale de la paroi latérale (3a) du corps tubulaire (3) dudit corps (2) de filtre plus proche de ladite première extrémité de tête (2a) dudit corps (2) de filtre présente des ouvertures traversantes ayant sensiblement la même dimension inférieure que la dimension des ouvertures traversantes (5) d'une section longitudinale de la paroi latérale (3a) du corps tubulaire (3) dudit corps (2) de filtre proximale de ladite seconde extrémité de tête (2b) dudit corps (2) de filtre.

14. Filtre (1) selon la revendication 12 ou 13, la paroi latérale (3a) du corps tubulaire (3) dudit corps (2) de filtre comprenant :
- une section exempte d'ouvertures latérales s'étendant sur une distance égale à 15-40 % de la longueur longitudinale de ladite paroi latérale (3a) du corps tubulaire (3) dudit corps (2) de filtre à partir de ladite seconde extrémité de tête (2b) dudit corps (2) de filtre et/ou
- une section exempte d'ouvertures latérales s'étendant sur une distance égale à 10-25 % de la longueur longitudinale de ladite paroi latérale (3a) du corps tubulaire (3) dudit corps (2) de filtre à partir de ladite première extrémité de tête (2a) dudit corps (2) de filtre.

15. Filtre (1) selon l'une quelconque des revendications 1 à 14, comprenant des moyens de dérivation pour identifier un chemin de dérivation (27) adapté pour relier ladite chambre d'alimentation (10) à ladite au moins une sortie (5) de fluide hydraulique en contournant ladite cartouche filtrante (6),
lesdits moyens de dérivation comprenant :
- un corps tubulaire (25) à l'intérieur duquel un chemin de dérivation (27) est identifié à partir de ladite chambre d'alimentation (10) jusqu'à ladite au moins une sortie (5) de fluide hydraulique, un siège (20) d'obturateur étant identifié dans ledit chemin de dérivation (27) ;
- un obturateur (23) logé et guidé de manière mobile dans ledit chemin de dérivation (27) à partir d'une/et vers une position de fermeture avancée étanche avec ledit siège (20) d'obturateur, la pression du fluide hydraulique dans ladite chambre d'alimentation agissant dans le sens de l'éloignement dudit obturateur (23) à partir dudit siège (20) d'obturateur et du rétablissement de la circulation du fluide hydraulique dans ledit chemin de dérivation (27), et
- des moyens élastiques (24) positionnés pour agir sur ledit obturateur (23) avec une charge élastique prédéfinie et le pousser vers ladite position de fermeture avancée étanche avec ledit siège (20) d'obturateur, l'action dudit ressort étant, lors de l'utilisation, destinée à s'opposer à l'action exercée sur ledit obturateur (23) par le fluide sous pression contenu dans ladite chambre d'alimentation (10),
lors de l'utilisation, ledit obturateur (23) est destiné à se déplacer vers l'arrière dudit siège (20) d'obturateur lorsque la pression du fluide hydraulique sous pression agissant sur ledit obturateur (23) est supérieure à la force exercée par lesdits moyens élastiques (24),
**caractérisé en ce que** lesdits moyens de dérivation sont associés audit corps (2) de filtre à proximité de ladite première extrémité de tête (2a) du corps (2) de filtre où se trouve ladite chambre d'alimentation (10).
en référence à un sens de déplacement du fluide hydraulique identifié dans ledit filtre (1) à partir de ladite entrée (4) jusqu'à ladite au moins une sortie (5), ledit chemin de dérivation (27) est positionné :
- en amont de ladite cartouche filtrante (6),
- en aval de ladite chambre d'alimentation (10) et
- en aval desdits moyens d'interception de fluide hydraulique prévu pour créer une résistance au passage du fluide hydraulique afin de s'opposer, ralentir et/ou empêcher la vidange du fluide hydraulique de ladite chambre d'alimentation (10) vers ladite première chambre (9a) interne à ladite cartouche filtrante (6).
